# EUROPEAN PATENT APPLICATION

(11) **EP 4 640 347 A1**
(43) Date of publication of application: **29.10.2025**
(21) Application number: 25171904.3
(22) Date of filing: 23.04.2025
(51) Int. Cl.: B23B 51/06

(54) **CUTTING TOOL FOR USE IN HOLE MACHINING AND TOOL BODY OF SUCH CUTTING TOOL**

(30) Priority: 26.04.2024 JP 2024072059
(71) Applicant: Tungaloy Corporation, Iwaki-shi, Fukushima 970-1144 (JP)
(72) Inventor: SHIKAMA, Hiroya, Iwaki-shi, Fukushima, 9701144 (JP)
(74) Representative: Vossius & Partner Patentanwälte Rechtsanwälte mbB

(57) **Abstract**

A tool body 10 of a cutting tool 1 for use in hole machining is provided with an insert mounting seat 20 on which a cutting insert 60 is mounted, and such tool body 10 includes: a chip discharge bore 30 formed so as to extend from the insert mounting seat 20 toward a base-end side 10b of the tool body 10; and a coolant flow path 40 for supplying coolant from the base-end side 10b toward a leading-end side 10t of the tool body 10. The coolant flow path 40 includes a through-hole 41 that extends from a peripheral surface 14 of the tool body 10 toward the leading-end side 10t of the tool body 10.

## Description

### Background

### Field

The present invention relates to a cutting tool for use in hole machining and a tool body of such cutting tool.

### Description of Related Art

In the drilling process using a rotary cutting tool, such as a tool for the BTA (Boring and Trepanning Association) process, it is necessary to supply coolant toward a cutting edge of a cutting insert which is provided on the leading-end side of the body of the tool (such body will hereinafter be referred to as a "tool body" for description herein) (see, for example, JP2003-502163 A and JP2015-066678 A). In this regard, conventional cutting tools are typically structured such that coolant is supplied toward the cutting edge through a feeder groove formed on the peripheral part of the tool body.

However, the above-mentioned cutting tools for use in hole machining also have a chip discharge bore with an opening called a "chip mouth," and due to this configuration, most of the coolant supplied from the base-end side of the tool body is easily discharged through the chip mouth before it reaches the leading-end side of the tool. In particular, since BTA tools often use water-insoluble viscous cutting oil as coolant, supplying coolant successfully to the cutting edge is not easy in practice.

### Summary

In view of the above-described circumstances, an object of the present invention is to provide a cutting tool for use in hole machining, that is capable of supplying a sufficient amount of coolant to the leading-end side of the tool, and a tool body of such cutting tool.

In order to achieve the above object, the present inventors conducted diligent studies on the structures of cutting tools for use in hole machining and the characteristics of each tool. For example, in BTA tools, the tool body is in the shape of a pipe (tube) and chips and coolant are discharged through the interior of such pipe-like tool body. It is therefore considered common knowledge and technique in the art to supply coolant from the periphery of the pipe (tube), and it can be said that BTA tools are designed based on the premise of such idea. However, this structure results in allowing most of the coolant supplied from the periphery of the tool to be drawn into the chip discharge bore (more specifically, into an opening, called a "chip mouth," of the bore) before reaching the leading end of the tool, so that it is not easy to successfully supply the coolant to the cutting edge. As a result of further studying the above-indicated structure and problems involved therewith, the present inventors have finally obtained a finding whereby the above-described problem can be solved.

An aspect of the present invention that has been completed based on such finding is a tool body of a cutting tool for use in hole machining, provided with an insert mounting seat on which a cutting insert is mounted, and such tool body includes:
a chip discharge bore formed so as to extend from the insert mounting seat toward a base-end side of the tool body; and
a coolant flow path for supplying coolant from the base-end side toward a leading-end side of the tool body,
wherein the coolant flow path includes a through-hole that extends from a peripheral surface of the tool body toward the leading-end side of the tool body.

According to the above-described tool body of a cutting tool for use in hole machining, since the coolant flow path includes a through-hole that extends from the peripheral surface toward the leading-end side of the tool body, a sufficient amount of coolant, including a certain amount of coolant that would otherwise be drawn into the chip discharge bore in the conventional structures, can be supplied to the leading-end side of the tool via the through-hole. When the cutting process is performed using a cutting tool having the above-described tool body, such increased amount of coolant successfully supplied to the leading-end side of the tool leads to improved performance of lubricating and cooling the cutting tool, particularly a portion around the cutting edge.

In the above-described tool body of a cutting tool for use in hole machining, the through-hole may pass through the tool body until reaching an end surface on the leading-end side of the tool body.

In the above-described tool body of a cutting tool for use in hole machining, the through-hole may separate at a point before reaching the end surface.

In the above-described tool body of a cutting tool for use in hole machining, a leading-end-side opening of the through-hole formed on the end surface in the leading-end side of the tool body may have a substantially circular or oval shape with a circular arc, or have a substantially trapezoidal shape.

The above-described tool body of a cutting tool for use in hole machining may have a plurality of through-holes.

In the above-described tool body of a cutting tool for use in hole machining, a plurality of through-holes may be arranged at positions distributed circumferentially along the peripheral surface of the tool body.

In the above-described tool body of a cutting tool for use in hole machining, the chip discharge bore may be formed radially inward of the peripheral surface of the tool body, and a base-end-side opening of the through-hole may be located at a position that is closer to the base-end side than a leading-end-side opening of the chip discharge bore (that serves as an inlet for chips) is to the base-end side.

In the above-described tool body of a cutting tool for use in hole machining, the chip discharge bore may comprise a plurality of bores that join together on a way heading from the leading-end side toward the base-end side.

The above-described tool body of a cutting tool for use in hole machining may have a tubular connection part, and a larger-diameter part formed on the leading-end side of the connection part and having a larger diameter than that of the connection part, and the through-hole may be provided so that at least a portion of the through-hole passes through the larger-diameter part.

In the above-described tool body of a cutting tool for use in hole machining, a base-end-side opening of the through-hole may be formed in an inverse tapered part between the connection part and the larger-diameter part.

Another aspect of the present invention is a cutting tool for use in hole machining, including a tool body as described above, and a cutting insert.

Yet another aspect of the present invention is a cutting tool for use in hole machining, the tool including: a chip discharge bore formed so as to extend from a leading-end side toward a base-end side of the cutting tool; and a coolant flow path for supplying coolant from the base-end side toward the leading-end side of the cutting tool, wherein the coolant flow path includes a through-hole that extends from a peripheral surface of the cutting tool toward the leading-end side of the cutting tool.

The above-described cutting tool for use in hole machining may be a brazed tool in which a cutting tip is brazed in the leading-end side of the tool.

### Brief Description of Drawings

Fig. 1 is a perspective view of a cutting tool for use in hole machining according to an embodiment of the present invention, as viewed from a leading-end side of the tool.
Fig. 2 is a perspective view of a cutting tool as viewed from a base-end side of the tool.
Fig. 3 is an illustration schematically showing the spatial shapes of a coolant flow path and a chip discharge bore formed in a cutting tool.
Fig. 4 is an illustration of a cutting tool as viewed from a leading-end side of the tool.
Fig. 5 is an illustration of the cutting tool of Fig. 4 as viewed from the upper side in Fig. 4.
Fig. 6A shows the result of simulating and analyzing the flow of coolant in a cutting tool according to the present embodiment, and Fig. 6B shows the results of performing the same simulation and analysis for a conventional cutting tool.

### Detailed Description

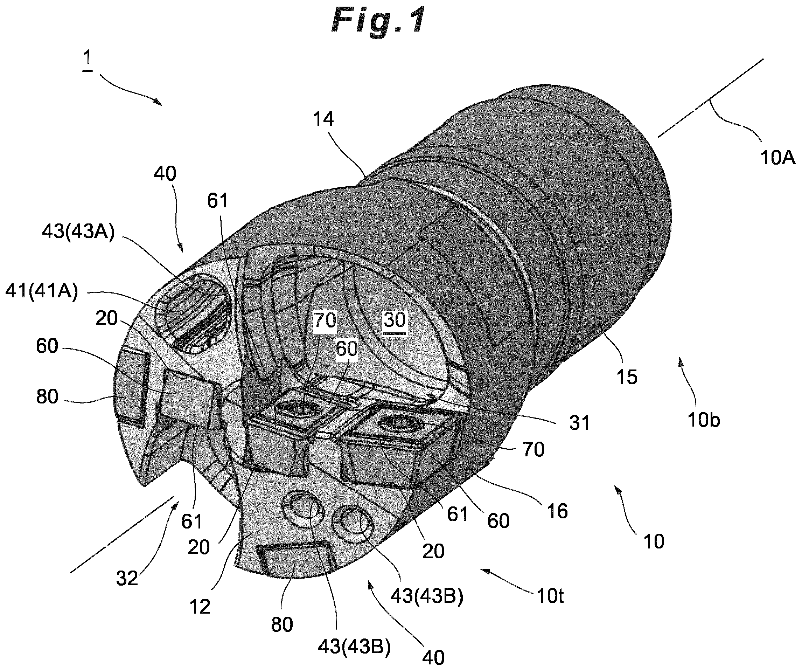

Preferred embodiments of a cutting tool for use in hole machining according to the present invention will now be described in detail, with reference to the attached drawings (see Fig. 1, etc.).

A cutting tool 1 for use in hole machining is a tool having an insert mounting seat 20 on which a cutting insert 60 is mounted on a leading-end side (indicated by reference sign 10t) of a tool body (hereinafter also referred to as a "drill head") 10. The drill head 10 is substantially cylindrical in shape and is formed so as to extend from a base-end side (indicated by reference sign 10b) to the leading-end side 10t along a central axis 10A.

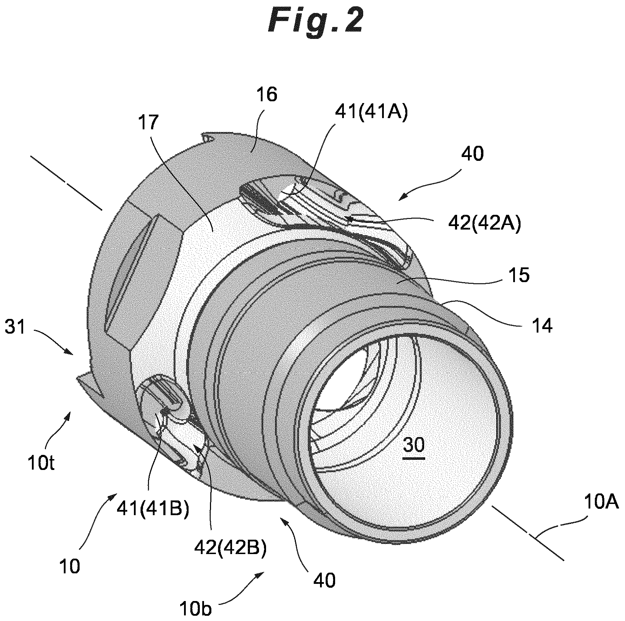

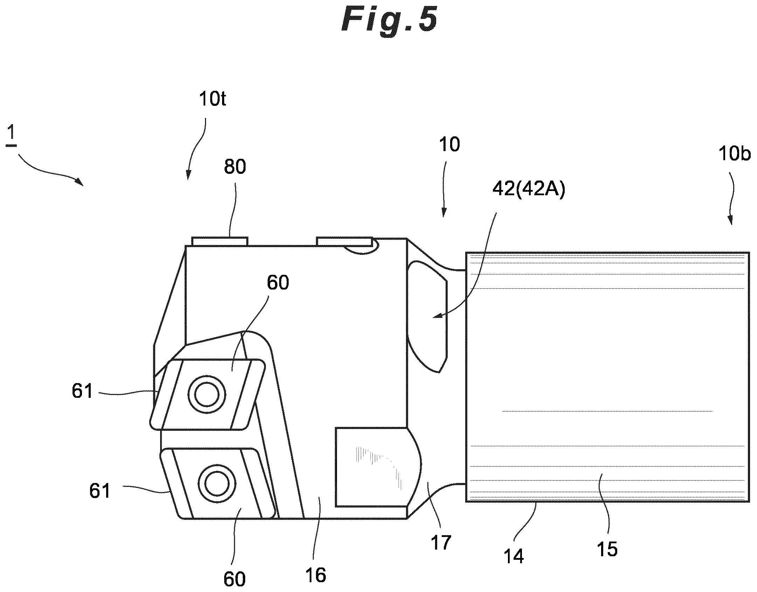

The drill head 10 of the cutting tool 1 according to the present embodiment has a connection part 15, a larger-diameter part 16 and an inverse tapered part 17, and it is shaped so as to have a chip discharge bore 30 and a coolant flow path 40 provided therein (see Figs. 1 and 2, etc.). The connection part 15 is cylindrical in shape and its interior provides space in which a portion of the chip discharge bore 30 through which chips and coolant C are discharged is formed. The larger-diameter part 16, which is larger in diameter than the connection part 15, is formed on the leading-end side of the connection part 15. The inverse tapered part 17 has an inverse tapered peripheral surface and is formed between the connection part 15 and the larger-diameter part 16 (see Fig. 5, etc.). Further, a male thread (not shown in the drawings) that engages with a female thread of a drill pipe (not shown in the drawings) is formed on the peripheral surface of the cylindrical shape of the connection part 15, so that the drill head 10 is attached to the drill pipe.

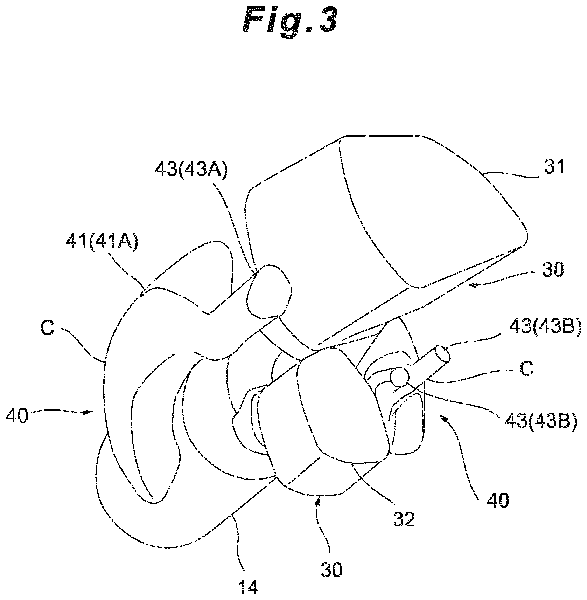

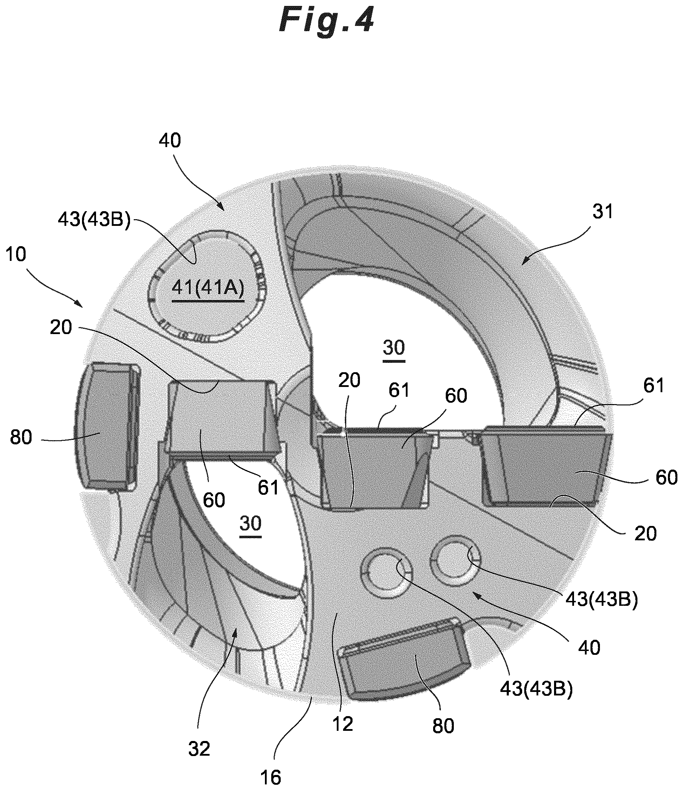

The chip discharge bore 30 is formed radially inward of the peripheral surface 14 of the drill head 10 and extends from a portion near the insert mounting seat 20 in the leading-end side 10t toward the base-end side 10b of the drill head 10 (see Fig. 1, etc.). The leading-end side 10t of the drill head 10 includes an area called a chip pocket, and an opening (also called a chip mouth) 31, 32 of the chip discharge bore 30 is formed at a rear end of such chip pocket. The portion where the drill head 10 is opened toward the periphery serves as a chip pocket, and the portion where the drill head 10 has a peripheral wall corresponds to the chip discharge bore 30. The cutting tool 1 of the present embodiment has two openings 31 and 32 of different sizes on the leading-end surface 12 (see Fig. 4). The two openings 31 and 32 each serve as an inlet for chips and the respective chip discharge bores 30 continuing from the two openings 31 and 32 join together at a position on the way heading from the leading-end surface 12 toward the base-end side 10b (see Figs. 1 and 3, etc.).

The coolant flow path 40 is formed so as to supply coolant from the base-end side 10b toward the leading-end side 10t of the drill head 10. In the present embodiment, a through-hole 41 extending from the peripheral surface 14 of the drill head 10 toward the leading-end side 10t is provided so that it passes through the larger-diameter part 16 of the drill head 10, and such through-hole 41 forms a portion of the coolant flow path 40, as will be described later. A base-end-side opening 42 of the through-hole 41 is formed in the inverse tapered part 17 (see Fig. 2), while a leading-end-side opening 43 of the through-hole 41 is formed on the leading-end surface 12 of the drill head 10 (see Figs. 1 and 4). The base-end-side opening 42 preferably has a shape that allows coolant C to be easily introduced and to flow into the through-hole 41 when the cutting tool 1 is rotating for cutting. For example, the base-end-side opening 42 may be shaped so as to be inclined with respect to the central axis 10A as it extends to the leading-end side 10t, or may be shaped so as to also extend in the circumferential direction (see Fig. 2).

Two or more through-holes 41 may be formed. Such two or more through-holes 41 may be arranged at positions distributed circumferentially along the peripheral surface 14 of the drill head 10. In the present embodiment, the drill head 10 is provided with two through-holes 41A and 41B. These two through-holes 41A and 41B are formed so as to face each other across the central axis 10A in a portion of the drill head 10 where no chip discharge bore 30 is formed (see Fig. 1, etc.). Further, the respective openings of the two through-holes 41A and 41B in the leading-end side 10t (leading-end-side openings 43A and 43B) are formed on the leading-end surface 12 of the drill head 10 in a manner such that they face each other across the central axis 10A and do not overlap with portions where the openings 31 and 32 of the chip discharge bore 30 are formed on the leading-end surface 12 (see Fig. 4).

The through-hole 41 may be in the shape of being separated in the middle. In the present embodiment, the through-hole 41B (which is one of the through-holes) is designed to separate into two parts on the way toward the leading-end side 10t (see Fig. 3, etc.). The leading-end-side opening 43B of such through-hole 41B is comprised of two open holes that correspond to the respective branch paths (holes) (see Figs. 1 and 4). By designing the through-hole 41 in a shape which is separated in the middle as described above, the flow rate of the coolant C can be increased while retaining the tool rigidity of the cutting tool 1 or of the drill head 10 thereof.

Preferably, the leading-end-side opening 43A of the through-hole 41A and the leading-end-side opening 43B of the through-hole 41B are configured so as not to make a large impact on the strength of the drill head 10, particularly the strength of the leading-end side 10t. In the cutting tool 1 of the present embodiment, the leading-end-side opening 43B of the through-hole 41B is circular in shape and smaller than the leading-end-side opening 43A of the through-hole 41A in terms of their open area, and this configuration reduces the impact that would otherwise be given to the strength. Further, the shape of the leading-end-side opening 43A of the through-hole 41A is determined by taking into account the shape of the area in which the leading-end-side opening 43A is formed, more specifically, the respective shapes of the openings 31, 32 of the chip discharge bore 30, the respective shapes of the neighboring insert mounting seat 20, a cutting insert 60 and a guide pad 80, and the spacings from these elements, and such shape of the leading-end-side opening 43A may be, for example, a substantially circular or oval shape with a circular arc, or a substantially trapezoidal shape (see Fig. 4, etc.).

Furthermore, base-end-side openings 42A and 42B, which are the respective openings of the through-holes 41A and 41B on the base-end side 10b, are located at positions that are closer to the based end side 10b than the openings 31 and 32 of the chip discharge bore 30 (that are formed on the leading-end side 10t) are to the base-end side 10b (see Fig. 5 etc.). According to the cutting tool 1 in which the base-end-side opening 42 (42A, 42B) of the through-hole 41 (41A, 41B) that constitutes part of the coolant flow path 40 is arranged at a position that is closer to the base-end side 10b than the opening 31, 32 of the chip discharge bore 30 is to the base-end side 10b as described above, the through-hole 41 starts at a position rearward of the chip discharge bore 30 and extends from that position to connect to the leading-end side 10t of the drill head 10 of the cutting tool 1, so that coolant can be more effectively supplied to the leading-end side 10t. Moreover, the cutting tool 1 having the above-described configuration reduces the amount of coolant C that would otherwise be drawn into the opening (chip mouth) 31, 32 before reaching the cutting edge 61.

In the cutting tool 1, a cutting insert 60 and a guide pad 80 can be detachably mounted to the leading-end side 10t of the drill head 10 of the cutting tool 1 (see Fig. 1, etc.). The specific arrangement and form of such cutting insert 60 and guide pad 80 are not limited. By way of example, in the cutting tool 1 of the present embodiment, two cutting inserts 60 are mounted on the opening 31 of the chip discharge bore 30, and one cutting insert 60 is mounted on the opening 32, wherein each insert is mounted with a corresponding insert mounting screw 70. Furthermore, two guide pads 80 are provided on the peripheral surface 14 near the leading-end side 10t - one at a position radially outward of the cutting insert 60 mounted on the opening 32, and the other at a position close to the leading-end-side opening 43Bn (see Fig. 4, etc.). More specifically, in the cutting tool 1 of the present embodiment in which three cutting inserts 60 are provided and cutting edges 61 are accordingly arranged at three positions, it is difficult to balance the cutting force of the tool only with the cutting edges 61, and the cutting force given by the two cutting inserts 60 arranged in a line is likely to be increased (compared to the cutting force given by the remaining one cutting insert 60). Considering the above, the cutting tool 1 of the present embodiment is configured such that a guide pad 80 is arranged in a direction at an angle of approximately 90 degrees (in the present embodiment, such direction is heading toward the bottom of Fig. 4) relative to the line in which the cutting inserts 60 are arranged, and another guide pad 80 is arranged in a direction of an angle of approximately 180 degrees (in the present embodiment, such direction is heading toward the left side in Fig. 4) relative to the same line of arrangement of the cutting inserts 60, for stabilizing the machining diameter, thereby receiving the force with these guide pads 80.

In the above-described cutting tool 1 of the present embodiment, when coolant C is supplied from the base-end side 10b of the tool, it first flows over the outer side of the connection part 15 (in other words, it flows in a tubular space between the cutting tool 1 and a workpiece (an article subject to cutting)) toward the leading-end side 10t, then flows into the through-hole 41 (41A, 41B) via the base-end-side opening 42 (42A, 42B), and comes out of the leading-end-side opening 43 (43A, 43B), without being drawn into the chip discharge bore 30 in the middle. Such coolant C, which flows inside the through-hole 41 (41A, 41B) and then comes out of the leading-end-side opening 43 (43A, 43B), is able to more safely arrive at the cutting edge 61 of the cutting insert 60.

As described above, according to the cutting tool 1 of the present embodiment, a portion of the coolant flow path 40 is configured by the through-hole 41 (41A, 41B) that extends through the drill head (tool body) 10 from the peripheral surface 14 until reaching the leading-end surface 12 on the leading-end side 10t of the drill head 10. This configuration enables a sufficient amount of coolant C, including a certain amount of coolant that would otherwise be drawn into the chip discharge bore in the conventional structures, to be successfully supplied to the leading-end side 10t of the cutting tool 1. By increasing the amount of coolant C successfully supplied to the leading-end side 10t of the cutting tool 1, the lubricating and cooling performance of the tool, particularly, the lubrication and cooling of a portion around the cutting edge 61, can be enhanced during the cutting processing using the cutting tool 1, and this further leads to a longer life of the cutting edge 61 of the cutting insert 60.

The above-described embodiment is an example of preferred embodiments of the present invention, but the present invention is not limited to such example and may be implemented with various modifications without departing from the spirit thereof. For example, the cutting tool 1 described in the above embodiment is a so-called indexable cutting tool in which a cutting insert 60 is detachably mounted to the insert mounting seat 20 of the drill head (tool body) 10; however, it will obviously be appreciated that the present invention may also be applied to other types of tools, such as a drill head (tool body) 10 itself wherein a cutting insert 60 is removed from the cutting tool 1, or a tool of a brazed type in which a cutting tip of cemented carbide or the like is brazed to the tool.

### Example

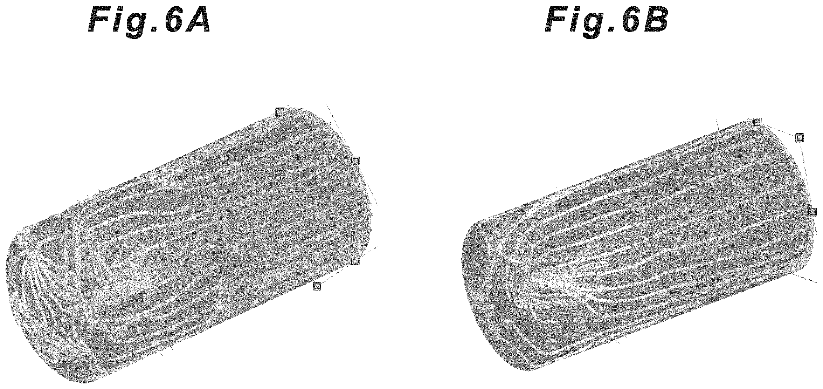

A flow of coolant in the cutting tool 1 of the present embodiment and in a cutting tool having a conventional structure was simulated for fluid analysis, and the respective results were compared (see Fig. 6). The analysis confirmed that, in the cutting tool 1 of the present embodiment, coolant C was delivered to the leading-end side 10t of the drill head (tool body) 10 through the coolant flow path 40 and the through-hole 41, so that the coolant C adequately functioned to cool and lubricate the cutting edges 61 and guide pads 80. The analysis also confirmed that, in contrast, in the conventional cutting tool having no through-hole, the coolant was drawn into the chip discharge bore on the way to the cutting edge so that some of the coolant was not successfully supplied to the cutting edge and others, thereby resulting in the conventional cutting tool causing a 20% or greater loss of coolant flow rate at the leading end of the tool. In contrast, the loss of flow rate at the same position in the cutting tool 1 of the present embodiment was only 1% or less.

The present invention is suited for use in a cutting tool for hole machining.

## Claims

1. A tool body of a cutting tool for use in hole machining, provided with an insert mounting seat on which a cutting insert is mounted, the tool body comprising:
a chip discharge bore formed from the insert mounting seat toward a base-end side of the tool body; and
a coolant flow path for supplying coolant from the base-end side toward a leading-end side of the tool body,
wherein the coolant flow path includes a through-hole extending from a peripheral surface of the tool body toward the leading-end side.

2. The tool body according to claim 1, wherein the through-hole passes through the tool body until reaching an end surface on the leading-end side of the tool body.

3. The tool body according to claim 2, wherein the through-hole separates at a point before reaching the end surface.

4. The tool body according to claim 2, wherein a leading-end-side opening of the through-hole formed on the end surface in the leading-end side of the tool body has a substantially circular or oval shape with a circular arc, or has a substantially trapezoidal shape.

5. The tool body according to claim 1, comprising a plurality of the through-holes.

6. The tool body according to claim 5, wherein the plurality of through-holes is arranged at positions distributed circumferentially along the peripheral surface of the tool body.

7. The tool body according to any one of claims 1-6, wherein the chip discharge bore is formed at a position radially inward of the peripheral surface of the tool body, and wherein a base-end-side opening of the through-hole is located at a position that is closer to the base-end side than a leading-end-side opening of the chip discharge bore, that serves as an inlet for chips, is to the base-end side.

8. The tool body according to claim 7, wherein the chip discharge bore comprises a plurality of bores that join together on a way heading from the leading-end side toward the base-end side.

9. The tool body according to any one of claims 1-6, comprising a tubular connection part, and a larger-diameter part formed on the leading-end side of the connection part and having a larger diameter than that of the connection part, wherein at least a portion of the through-hole passes through the larger-diameter part.

10. The tool body according to claim 9, wherein a base-end-side opening of the through-hole is formed in an inverse tapered part between the connection part and the larger-diameter part.

11. A cutting tool for use in hole machining, comprising:
a tool body according to any one of claims 1-6; and
a cutting insert.

12. A cutting tool for use in hole machining, comprising:
a chip discharge bore formed from a leading-end side toward a base-end side of the cutting tool; and
a coolant flow path for supplying coolant from the base-end side toward the leading-end side of the cutting tool,
wherein the coolant flow path includes a through-hole that extends from a peripheral surface of the cutting tool toward the leading-end side.

13. The cutting tool according to claim 12, which is a brazed tool in which a cutting tip is brazed in the leading-end side.
